# EUROPEAN PATENT APPLICATION

(11) **EP 4 068 110 A1**
(43) Date of publication of application: **05.10.2022**
(21) Application number: 21198979.3
(22) Date of filing: 24.09.2021
(51) Int. Cl.: G06F 16/182, G06F 16/27, G06F 21/62, G06F 21/64, H04L 67/1097, H04L 9/40

(54) **DATA MANAGEMENT SYSTEM, DATA MANAGEMENT METHOD, AND NODE**

(30) Priority: 31.03.2021 JP 2021059741
(71) Applicant: Hitachi, Ltd., Tokyo 100-8280 (JP)
(72) Inventor: NAKAJIMA, Jun, Chiyoda-ku, 100-8280 (JP)
(74) Representative: Mewburn Ellis LLP

(57) **Abstract**

A data management system 10 includes distributed ledger nodes 1000 forming a distributed ledger system, one of the nodes configured to execute processing to receive a request for storing data from a different apparatus and generate data segments by dividing the data, processing to determine a plurality of allocation nodes to which to allocate the data segments in conformity to a predetermined rule, processing to distribute and store the data segments in data regions in the respective allocation nodes, and processing to manage, in a distributed ledger, information on the allocation nodes and access management information for management of access to the data, using a smart contract that the node already has.

## Description

### CROSS-REFERENCE TO RELATED APPLICATIONS

This application claims priority pursuant to Japanese patent application No. 2021-59741, filed on March 31, 2021, the entire disclosure of which is incorporated herein by reference.

### BACKGROUND

### Technical Field

The present disclosure relates to a data management system, a data management method, and a node.

### Related Art

Transactions made between users to transact various kinds of business have heretofore been processed via an appropriate central authority such as a financial institution or a government. Meanwhile, technologies for users to make direct transactions in a peer-to-peer manner have emerged recently to replace such processing. One example of such technologies is a distributed ledger technology using a blockchain (hereinafter also referred to as a BC).

Various technologies derivative of this distributed ledger technology have been proposed, leading to the continuing evolution of the distributed ledger technology. The distributed ledger technology currently has the following main characteristics: (1) a transaction between participants in a distributed ledger is confirmed not by a central authority, but by consensus building with or approval by (any or particular) participant(s), (2) a plurality of transactions are grouped together into a block, such blocks are recorded in the distributed ledger called a blockchain like beads, and the consecutive blocks are hashed to make falsification substantially impossible, (3) all the participants share the same ledger data so that all the participants can check transactions.

Due to the above characteristics, the distributed ledger technology using BC is being considered to be applied to a wide variety of sectors, such as financial and manufacturing industries, as a system for reliable management and sharing of data or execution and management of transactions based on contracts.

With use of a framework for providing a distributed ledger (hereinafter also called a distributed ledger framework or a BC framework), a plurality of entities (such as, for example, corporates forming a consortium or a supply chain in a particular industry) can share information and conduct transactions with each other without being administered by a central authority.

Note that a blockchain or a distributed ledger is called a "consortium type" when only computers approved by particular one or more bodies or individuals are participants in transactions.

This consortium type is advantageous in that a transaction is approved fast due to the presence of an administrative entity that authenticates participants. For this reason, when the distributed ledger technology is used within a consortium in a particular industry, a consortium-type distributed ledger framework is typically used.

Also, to be able to support complicated transaction conditions and various applications, some distributed ledger frameworks can manage logic where a distributed ledger describes not only transaction data but also transaction conditions. This logic is called a smart contract (hereinafter also referred to as an SC). Technology concerning a distributed ledger framework with a capability to execute the SC is disclosed in "Quorum", [online], [searched on 12/25/2020], Internet <URL: https://consensys.net/quorum/developers> (Non-Patent Literature 1) and "Hyperledger Fabric", [online], [searched on 12/25/2020], Internet <URL: http://hyperledger-fabric.readthedocs.io/en/latest/> (Non-Patent Literature 2).

In such a distributed ledger framework, a transaction (hereinafter also referred to as a TX) is accepted through consensus building among nodes forming the distributed ledger framework based on predetermined consensus standards, and each node executes the TX and retains the result of the TX, thereby allowing information (a ledger) to be shared by the nodes. The above distributed ledger framework also has an SC execution capability to execute predetermined logic with respect to a TX.

Meanwhile, more and more organizations use the service of a BC via an API or the like without owning a node of the BC. Many of such organizations prefer to benefit from the data sharing on the distributed ledger, but keep particular data (such as, e.g., the monetary amount of a product sold or purchased, the savings balance, or contract contents) confidential from a particular one or ones of the organizations in the BC.

In a BC framework, organizations that own a BC node are provided with a data confidentiality function that allows the range over which to share data to be controlled on a node-by-node basis (see "Private Transaction" in Non-Patent Literature 1 and "Channel" and "Private Data" in Non-Patent Literature 2).

Meanwhile, organizations that use the service of BC without owning a BC node are provided with no such data confidentiality function. Then, data that such an organization wants to keep confidential is managed by a BC node operated by another organization. Thus, currently, an organization without a node cannot use the BC service with safety and security.

To address this problem, for example, one conceivable approach is to encrypt data to be stored in a BC node using a private key of a user, and then to use the data, and decrypt the data using the private key. In another conceivable approach, a what is called secret sharing technology (Japanese Patent Publication No. 2009-139990) may be employed. This secret sharing technology makes data confidentiality possible by dividing data to be stored into meaningless segments and storing the segments in distributed data regions.

However, the data encryption technology is said to have no information-theoretic security. With a large amount of computing resources, even encrypted data could be decoded, which may lead to information leak. Thus, even if data is encrypted, there is a risk in entrusting the data to a node-owning organization, which is nothing but one of the participants in the BC.

Also, since nodes share information in a BC, the segments of data divided using the secret sharing technology are all on the BC nodes, which enables node-owning organizations to decrypt the data. Also, there is a possibility that a node-owning organization which is supposed to manage the segments does not perform proper access control of the segments.

### SUMMARY

Thus, the present disclosure has an objective to provide a technique for providing an organization that does not own a BC node with a data confidentiality function in a BC service to enable the organization to use the service with security.

A data management system of this disclosure to solve the above objective comprising distributed ledger nodes forming a distributed ledger system, one of the nodes configured to execute processing to receive a request for storing data from a different apparatus and generate data segments by dividing the data, processing to determine a plurality of allocation nodes to which to allocate the data segments in conformity to a predetermined rule, processing to distribute and store the data segments in data regions in the respective allocation nodes, and processing to manage, in a distributed ledger, information on the allocation nodes and access management information for management of access to the data, using a smart contract that the node already has. Note that there is no limitation as to the concept of the above "different apparatus, " and the "different apparatus" may include not only a client node or another distributed ledger node, but also an input device or various user interfaces in the distributed ledger node (the same applies hereinafter).

A data management method of this disclosure implemented by a data management system, comprising: by a node forming a distributed ledger system, executing processing to receive a request for storing data from a different apparatus and generate data segments by dividing the data, processing to determine a plurality of allocation nodes to which to allocate the data segments in conformity to a predetermined rule, processing to distribute and store the data segments in data regions in the respective allocation nodes, and processing to manage, in a distributed ledger, information on the allocation nodes and access management information for management of access to the data, using a smart contract that the node already has.

A node of this disclosure forming a distributed ledger system, the node comprising a computation part that is configured to execute processing to receive a request for storing data from a different apparatus and generate data segments by dividing the data, processing to determine a plurality of allocation nodes to which to allocate the data segments in conformity to a predetermined rule, processing to distribute and store the data segments in data regions in the respective allocation nodes, and processing to manage, in a distributed ledger, information on the allocation nodes and access management information for management of access to the data, using a smart contract that the node already has.

The present disclosure provides a data confidentiality function in a BC service to an organization that does not own a BC node, enabling the organization to use the service with security.

### BRIEF DESCRIPTION OF THE DRAWINGS

Fig. 1 is a diagram illustrating an overview of a calculator system of the present embodiment.
Fig. 2 is a diagram showing an example configuration of the calculator system of the present embodiment.
Fig. 3 is a diagram showing an example of a node ownership information table in the present embodiment.
Fig. 4 is a diagram showing an example of a secret sharing policy table in the present embodiment.
Fig. 5 is a diagram showing an example of segment allocation information in the present embodiment.
Fig. 6 is a diagram showing an example of access management information in the present embodiment.
Fig. 7 is a diagram showing Flow Example 1 in a data management method of the present embodiment.
Fig. 8 is a diagram showing Flow Example 2 in the data management method of the present embodiment.
Fig. 9 is a diagram showing Flow Example 3 in the data management method of the present embodiment.
Fig. 10 is a diagram showing Flow Example 4 in the data management method of the present embodiment.
Fig. 11 is a diagram showing Flow Example 5 in the data management method of the present embodiment.
Fig. 12 is a diagram showing Flow Example 6 in the data management method of the present embodiment.
Fig. 13 is a diagram showing Flow Example 7 in the data management method of the present embodiment.

### DETAILED DESCRIPTION OF EMBODIMENTS

The following describes an embodiment of the present disclosure in detail using the drawings. Some examples are described with reference to the drawings. It should be noted that the examples described below are not intended to limit the disclosure defined by the scope of claims, and not all the elements described in the examples or combinations thereof are necessarily essential as the solving means of the present disclosure. Throughout the drawings, the same constituent element is denoted by the same reference numeral.

Also, the following description states that information in the present disclosure is represented as an "aaa table" or the like, but such information may be represented in a data structure other than the table or the like. To indicate that information is not dependent on a certain data structure, the "aaa table" or the like may be referred to as "aaa information. " In addition, although an expression "identification information," an "identifier," a "name," or an "ID" is used in describing a content of a piece of information, these expressions are interchangeable.

Although the following description may use a "program" as the subject of a sentence, a processor may instead be the subject of a sentence because the program is executed by the processor to perform predetermined processing using memory and communication ports (a communication device, a management I/F, a data I/F). Also, processing disclosed with a program used as the subject of a sentence may instead be processing performed by a calculator such as a management server (a management calculator) or an information processing apparatus.

Also, part or all of a program may be implemented by dedicated hardware. Also, various programs may be installed into calculators by a program distribution server or via a storage medium readable by the calculators. The various programs may be executed on a virtual environment such as a hypervisor or a container.

### <Network Configuration>

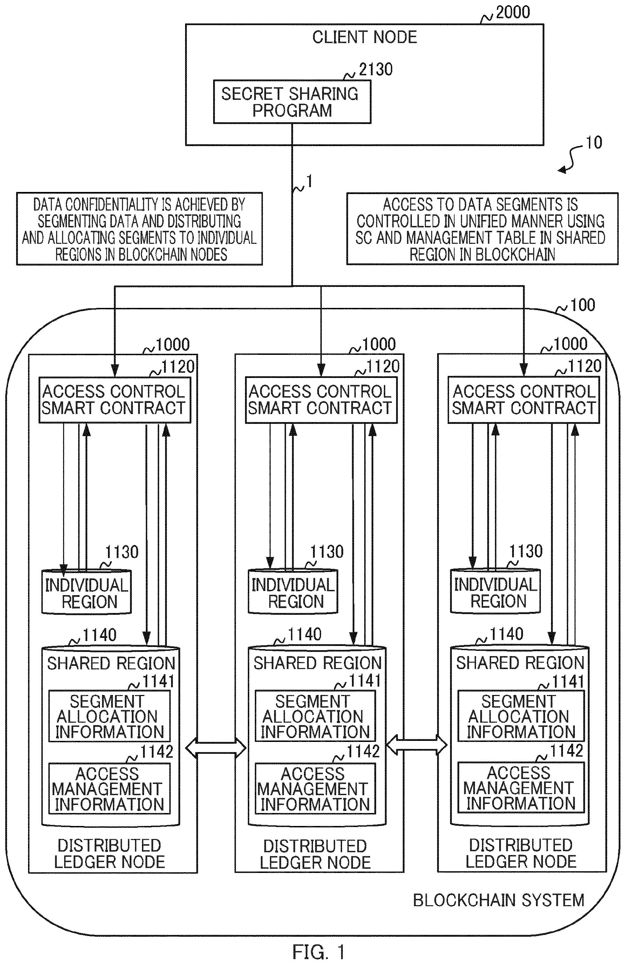

Fig. 1 is a diagram showing an example configuration of a calculator system 10 (a data management system) including a blockchain system 100 of the present embodiment. The calculator system 10 exemplified here is formed by distributed ledger nodes 1000 forming a distributed ledger system, i.e., the blockchain system 100, and a client node 2000 capable of accessing the blockchain system 100 via a network 1.

In the calculator system 10, a secret sharing program 2130 in the client node 2000 issues or receives a write execution request for a transaction (called a TX below), divides the data in the TX into segments, and transmits the TX containing a data segment to the distributed ledger nodes 1000.

Meanwhile, an access control smart contract 1120 in each distributed ledger node 1000 receives this TX and stores the data segment in the individual region 1130. At the same time, the distributed ledger node 1000 stores, in a shared region 1140 (a distributed ledger), information indicative of to which distributed ledger nodes 1000 the data segments are allocated and information on access to the segmented data (the data segments). This shared region 1140 is a data storage region synchronized across the distributed ledger nodes 1000.

Also, the secret sharing program 2130 in the client node 2000 issues or receives a read execution request for a TX, identifies the distributed ledger nodes 1000 to which data segments of the data to be read by the TX are allocated by referring to segment allocation information 1141 in the shared region 1140, and transmits the TX to each of the distributed ledger nodes 1000 identified as having the data segments allocated thereto.

Then, the access control smart contract 1120 in each distributed ledger node 1000 receives this TX and determines whether (the data segment of) the data to be read is permitted to be accessed by referring to access management information 1142 in the shared region 1140. If it is determined that the data is permitted to be accessed, the access control smart contract 1120 in the distributed ledger node 1000 acquires the data segment from the individual region 1130.

Then, the secret sharing program 2130 in the client node 2000 acquires the data segments from the access control smart contracts 1120 in the distributed ledger nodes 1000 and restores the original data based on the data segments.

### <Apparatus Configuration>

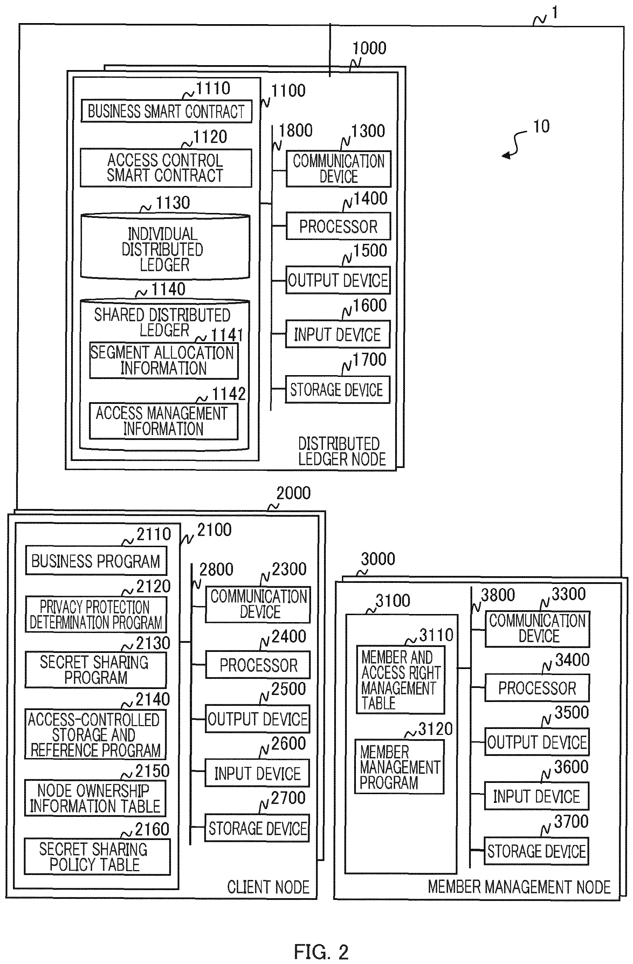

Fig. 2 is a diagram showing an example configuration of the calculator system 10 of the present embodiment. The calculator system 10 according to the present example includes at least one distributed ledger node 1000, at least one client node 2000, and at least one member management node 3000.

Note that these nodes are coupled to the network 1 to be able to connect to one another. The network 1 may be any network, including an Internet Protocol (IP).

Of these nodes, there are typically a plurality of the distributed ledger nodes 1000, and the following assumes that they are respectively operated and managed by entities (e.g., business operators, organizations, or vendors) forming a consortium.

Each distributed ledger node 1000 includes a memory 1100, a communication device 1300, a processor 1400, an output device 1500, an input device 1600, and a storage device 1700. These components are coupled to one another via an internal bus 1800 in the distributed ledger node 1000.

Of these components, the memory 1100 has stored therein a business smart contract 1110, the access control smart contract 1120, an individual distributed ledger 1130, and a shared distributed ledger 1140. The shared distributed ledger 1140 has stored therein the segment allocation information 1141 and the access management information 1142.

The distributed ledger node 1000 receives a TX via the network 1 and builds consensus with the other distributed ledger nodes as to whether to accept the TX. Then, if the consensus is built, the distributed ledger node 1000 executes the business smart contract 1110 and records, in the individual distributed ledger 1130 and the shared distributed ledger 1140, a history of the TX and state information which is based on a result of the execution. This processing is as described in Non-Patent Literature 1.

Out of business logics for the respective business systems, the business smart contract 1110 is a program for implementing mainly processing to read or write a TX from or to the BC.

The access control smart contract 1120 is a program for controlling access to data stored in the individual distributed ledger 1130 and the shared distributed ledger 1140.

In the following descriptions of processing flows, processing described as being executed by the access control smart contract 1120 may be executed by the access control smart contract 1120 itself or by the business smart contract 1110 called during that processing by the access control smart contract 1120.

The individual distributed ledger 1130 is a data region for storage of data shared only among nodes of particular organizations owning the distributed ledger nodes 1000. By contrast, the shared distributed ledger 1140 is a data region for storage of data shared among all the organizations participating in the BC.

The segment allocation information 1141 is information indicative of in which distributed ledger nodes 1000 data segments are stored. The access management information 1142 is information for controlling access to the data segment stored in the individual distributed ledger 1130.

The communication device 1300 is an appropriate device, such as a network interface card, for connecting the distributed ledger node 1000 to the network 1. Using the communication device 1300, the distributed ledger node 1000 can communicate with a program operating on the client node 2000 and a program operating on the member management node 3000 via the network 1.

The processor 1400 is an arithmetic device that executes various programs loaded into the memory 1100. The output device 1500 is a device that outputs results of processing executed by the distributed ledger node 1000, and is, for example, a display or the like.

The input device 1600 is a device used by a blockchain system administrator or a blockchain system user to input an instruction into the distributed ledger node 1000, and is, for example, a keyboard or the like.

The storage device 1700 is a storage medium for storing information, such as a hard disk drive (HDD), a solid-state drive (SSD), or a flash memory.

It is assumed herein that the client node 2000 is used by a party involved in a business to be implemented by a business program 2110. The client node 2000 exemplified in Fig. 2 includes a memory 2100, a communication device 2300, a processor 2400, an output device 2500, an input device 2600, and a storage device 2700. These components are coupled to one another via an internal bus 2800 in the client node 2000.

Of these components, the memory 2100 has stored therein the business program 2110, a privacy protection determination program 2120, the secret sharing program 2130, an access-controlled storage and reference program 2140, a node ownership information table 2150, and a secret sharing policy table 2160.

The business program 2110 receives input of business-related information from a user and executes processing. If this processing involves BC, the business program 2110 issues a TX and transmits the TX to the distributed ledger node 1000.

Note that the business program 2110 adds issuer information to the TX. The issuer information contains a member ID assigned by the member management node 3000 in advance and authentication information (a certificate) issued by the member management node 3000 for each member.

The privacy protection determination program 2120 is a module for determining whether to keep confidential the data in the TX issued from the business program 2110 to the distributed ledger node 1000. The business program 2110 uses the privacy protection determination program 2120 by transmitting the TX to the privacy protection determination program 2120 instead of transmitting the TX to the distributed ledger node 1000.

The secret sharing program 2130 is used to keep data involved in the processing executed by the business program 2110 confidential by means of secret sharing and access control using a smart contract.

Specifically, before the business program 2110 transmits the issued TX to the distributed ledger nodes 1000, the secret sharing program 2130 divides the data in the TX into segments, and then the segments are transmitted to the distributed ledger nodes 1000.

The access-controlled storage and reference program 2140 is used to keep data involved in the processing executed by the business program 2110 confidential by means of access control using a smart contract.

The user's organization node ownership information table 2150 has stored therein information on a user executing a TX, information on an organization to which the user belongs, and information on whether the organization to which the user belongs owns a node, and is used by the privacy protection determination program 2120.

The secret sharing policy table 2160 is a table defining policies for secret sharing processing executed by the secret sharing program 2130.

Other components of the client node 2000 are the same as those of the distributed ledger node 1000 and are therefore not described here.

The member management node 3000 plays the role of issuing authentication information (a certificate) to participants in the blockchain system. The member management node 3000 includes a memory 3100, a communication device 3300, a processor 3400, an output device 3500, an input device 3600, and a storage device 3700. These components are coupled to one another via an internal bus 3800 in the member management node 3000.

The memory 3100 has stored therein a member and access right management table 3110 and a member management program 3120. The member management program 3120 provides a capability of newly issuing authentication information on a member participating in the consortium and performing authentication at the time of TX execution.

It is assumed that the member management program 3120 uses a pair of a secret key and a public key to, e.g., authenticate a participating member, give a signature to a TX, and control the right to execute an SC. The information related to member management such as a secret key and a public key are stored in and managed by the member and access right management table 3110.

When receiving a TX, the distributed ledger node 1000 uses the capability of the member management program 3120 in the member management node 3000 to check whether the issuer of the TX is an authentic, authorized participant.

Other components of the member management node are the same as those of the distributed ledger node 1000, and are therefore not described here. Note that the member management node 3000 has the same configuration and functions as the ones in the related art shown in Non-Patent Literature 1.

Although the distributed ledger node 1000, the client node 2000, and the member management node 3000 in the example shown in Fig. 2 each have various programs and tables stored in their memory, the programs and tables may be stored in the storage device 1700 or other storage media (not shown) instead. In this case, at the time of executing a program, the processor 1400 loads the target program into the memory and executes the program thus loaded.

Also, the tables stored in the client node 2000 in Fig. 2 may be held by the distributed ledger node 1000, and the present disclosure is not limited to the above case.

Also, the privacy protection determination program 2120, the secret sharing program 2130, the access-controlled storage and reference program 2140, the user's organization node ownership information table 2150, and the secret sharing policy table 2160 in the client node 2000 may be operated on a calculator different from the client node on which the business program 2110 is operated, and the present disclosure is not limited to the above case.

### <Example Data Structures>

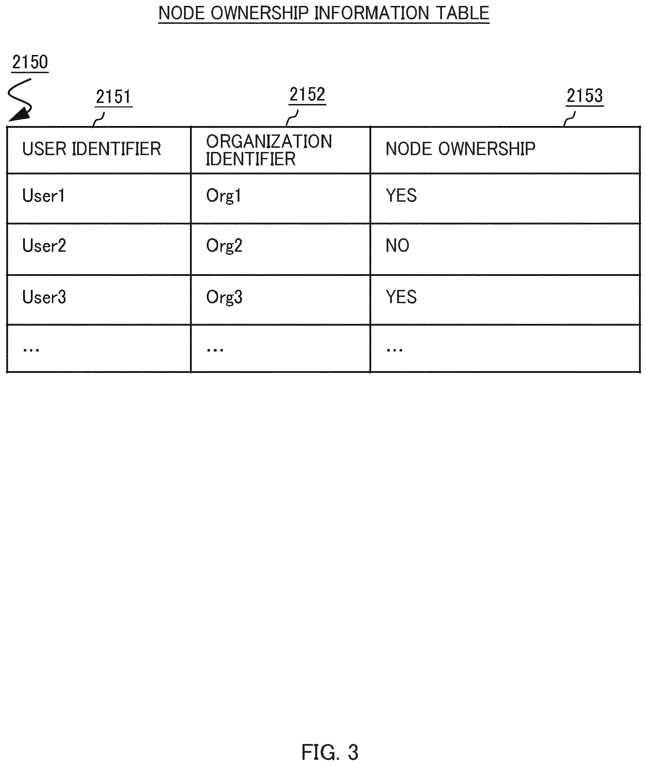

Fig. 3 is a diagram showing an example of the node ownership information table 2150 in the present embodiment. The node ownership information table 2150 has stored therein information indicative of whether a user is a node-owning organization. The node ownership information table 2150 can be automatically created from 1) information on users and organizations to which the users belong in the member and access right management table 3110 held by the member management node 3000 and 2) setting information indicative of which organizations' distributed ledger nodes are to be used, the setting information being used at the time of building the blockchain system. Instead, the node ownership information table 2150 may be created by manual inputs, and the creation method is not limited to the above.

By way of example, Fig. 3 shows an example where the node ownership information table 2150 has the following fields: user identifier 2151, organization identifier 2152, and node ownership 2153. Stored in the user identifier 2151 is information for uniquely identifying a user who issued a TX. Stored in the organization identifier 2152 is information for uniquely identifying the organization to which the user indicated by the user identifier 2151 belongs.

Stored in the node ownership 2153 is information indicative of whether the organization indicated by the organization identifier 2152 owns a distributed ledger node of the BC. In the example shown, a value "YES" is stored when the organization owns the distributed ledger node 1000 and a value "NO" is stored when the organization does not own the distributed ledger node 1000. However, the present disclosure is not limited to this case.

Note that the mode for indicating whether an organization owns a distributed ledger node in the present embodiment is not limited to the node ownership information table 2150 exemplified here. For example, instead of holding the information as a table, when determining whether a TX-executing user belongs to a node-owning organization, the privacy protection determination program 2120 may, for example, collect the information from the member and access right management table 3110 and the blockchain configuration file.

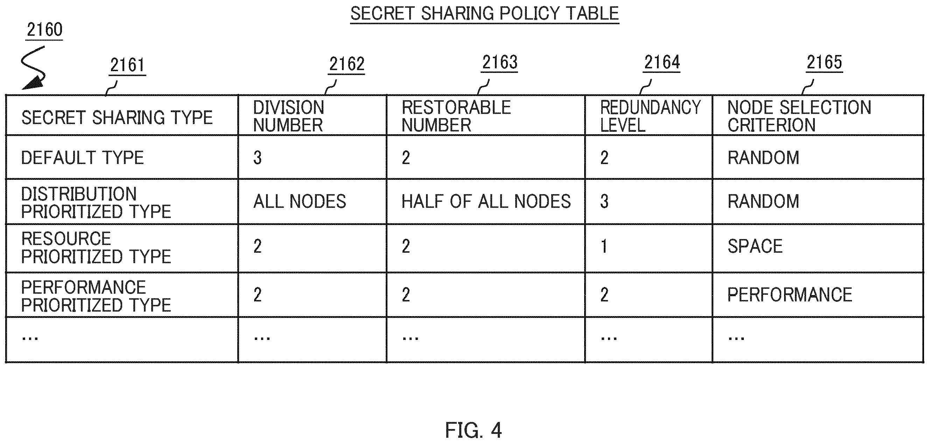

Fig. 4 is a diagram showing an example of the secret sharing policy table 2160 in the present embodiment. Stored in the secret sharing policy table 2160 are policies for conducting secret sharing of data in a TX.

By way of example, Fig. 4 shows an example where the secret sharing policy table 2160 has the following fields: secret sharing type 2161, division number 2162, restorable number 2163, redundancy level 2164, and node selection criterion 2165.

Of these fields, stored in the secret sharing type 2161 is the type of secret sharing to be executed, which is either a default type, a distribution prioritized type, a resource prioritized type, or a performance prioritized type. In the present embodiment, the secret sharing type to be used for keeping data confidential is predetermined for each user, each organization, each blockchain system, or the like, and if the secret sharing type is unselected, default-type secret sharing is performed.

For each type of secret sharing, the other fields of the secret sharing policy table 2160 are defined. Stored in the division number 2162 is the number of segments into which the data in a TX is to be divided. Stored in the restorable number 2163 is a number indicative of how many segments of all the segments need to be collected to be able to restore the data. Stored in the redundancy level 2164 is a number indicative of how many distributed ledger nodes 1000 are to hold the same single segment.

When a distributed ledger node in which a segment is stored is unavailable due to failure or maintenance, the same segment needs to be acquired from a different distributed ledger node. The value of the redundancy level 2164 indicates how many distributed ledger nodes 1000 can be unavailable for the same segment to be still acquirable.

Stored in the node selection criterion 2165 is a value indicative of how to select the distributed ledger nodes 1000 for allocating the segments for the secret sharing type designated. In the example shown, "RANDOM" for allocating segments randomly, "SPACE" for allocating segments in the order of available space, or "PERFORMANCE" for allocating segments in the order of performance margin are stored as values indicative of the criterion, but the present disclosure is not limited to this.

The secret sharing types shown here are merely an example. Other types may be included, or a user themselves may define a new secret sharing type and add it to the policy table. Changing the node selection criterion 2165 enables collateral advantageous effects to be obtained, such as improvement in access performance or efficient use of resources.

Note that the secret sharing policy table 2160 in the present embodiment only has to indicate policies for performing secret sharing, and may include fields other than the ones shown in the example, such as, e.g., conditional expressions regarding requirements for the distributed ledger nodes. The present disclosure is thus not limited to the above mode.

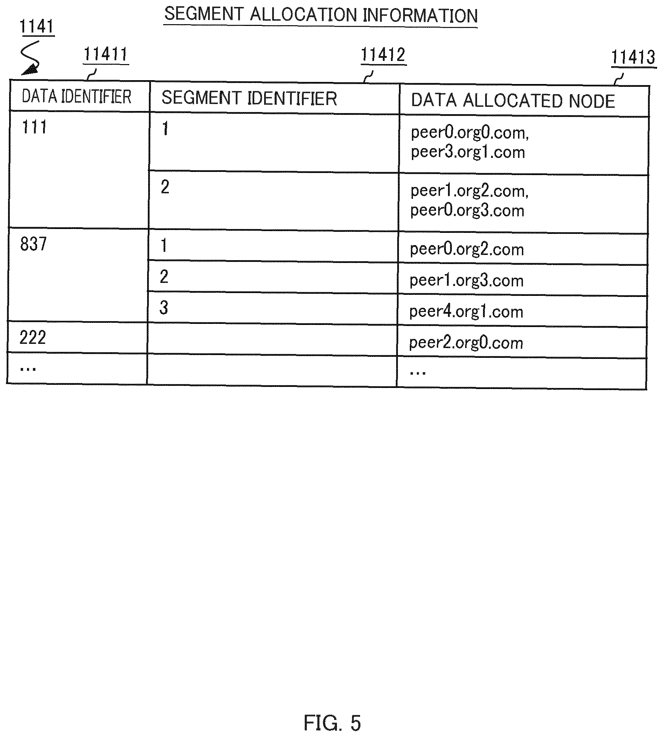

Next, Fig. 5 is a diagram showing an example of the segment allocation information 1141 in the present embodiment. Stored in the segment allocation information 1141 is information indicative of the distributed ledger nodes 1000 in which the respective data segments of data in a TX are stored.

The segment allocation information 1141 is stored in the shared distributed ledger 1140 of the distributed ledger node 1000 and is managed by the access control smart contract 1120 as information shared by all the distributed ledgers. By way of example, Fig. 5 shows an example where the segment allocation information 1141 has the following fields: data identifier 11411, segment identifier 11412, and data allocated node 11413.

Of these fields, stored in the data identifier 11411 is an identifier for uniquely identifying data. Stored in the segment identifier 11412 is an identifier for uniquely identifying a data segment in the data. Stored in the data allocated node 11413 is information on the distributed ledger node 1000 allocated with the data segment.

When the same segment is allocated to a plurality of distributed ledger nodes 1000 for the purpose of redundancy or the like, information on each of the plurality of distributed ledger nodes 1000 is stored in the data allocated node 11413.

Note that the segment allocation information 1141 in the present embodiment only has to indicate the information on allocation of data segments, and may include fields other than the ones shown in the example, such as, e.g., information on the time of storage of data segments. The present disclosure is thus not limited to the above mode.

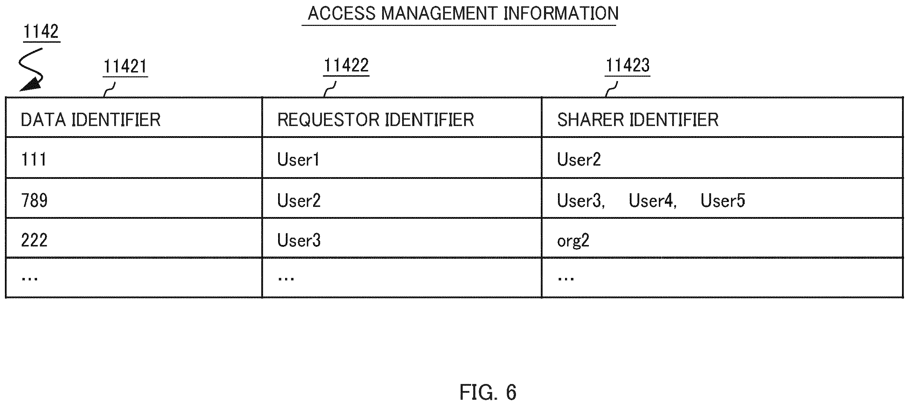

Next, Fig. 6 is a diagram showing an example of the access management information 1142 in the present embodiment. Stored in the access management information 1142 is a value indicative of a user-level or organization-level data shared range for each set of data.

The access management information 1142 is stored in the shared distributed ledger 1140 of the distributed ledger node 1000 and is managed by the access control smart contract 1120 as information shared by all the distributed ledgers.

By way of example, Fig. 6 shows an example where the access management information 1142 has the following fields: data identifier 11421, requestor identifier 11422, and sharer identifier 11423.

Of these fields, stored in the data identifier 11421 is an identifier for uniquely identifying data. Stored in the requestor identifier 11422 is an identifier uniquely identifying a requestor who executed a TX, i.e., who requested storage of data into the BC. Stored in the sharer identifier 11423 is an identifier for uniquely identifying a sharer designated as a party to share the data with.

Although the requestor and the sharer are assumed to be users here, identifiers indicative of organizations to which users belong may be used instead. The example shown in Fig. 6 indicates that "User3" requested storage of data indicated by the data identifier "222" into the BC, and a user "User3" and users belonging to an organization "org2" have the right to access the data.

Note that the access management information 1142 in the present embodiment only has to indicate information on a user or an organization that has the right to access the data stored in the BC, and may include fields other than the ones shown in the example, such as, e.g., information on a period of time in which or a time limit by which a certain data sharer can access the data. The present disclosure is thus not limited to the above mode. In the related art described in, e.g., Non-Patent Literature 2, upon receipt of a TX, the distributed ledger node 1000 can check whether the issuer of the TX is an authentic, authorized participant by using the capability of the member management program 3120 in the member management node 3000. However, there is no way to check whether a user or an organizer is authentic in accessing the data. Thus, this access management information 1142 is used to achieve detailed access management.

### <Flow Example 1>

Based on the drawings, the following describes an actual procedure in the data management method of the present embodiment. Various operations corresponding to the data management method described below are implemented by programs loaded into memory or the like and executed by the apparatuses forming the data management system 10. These programs are formed by code for performing the various operations described below.

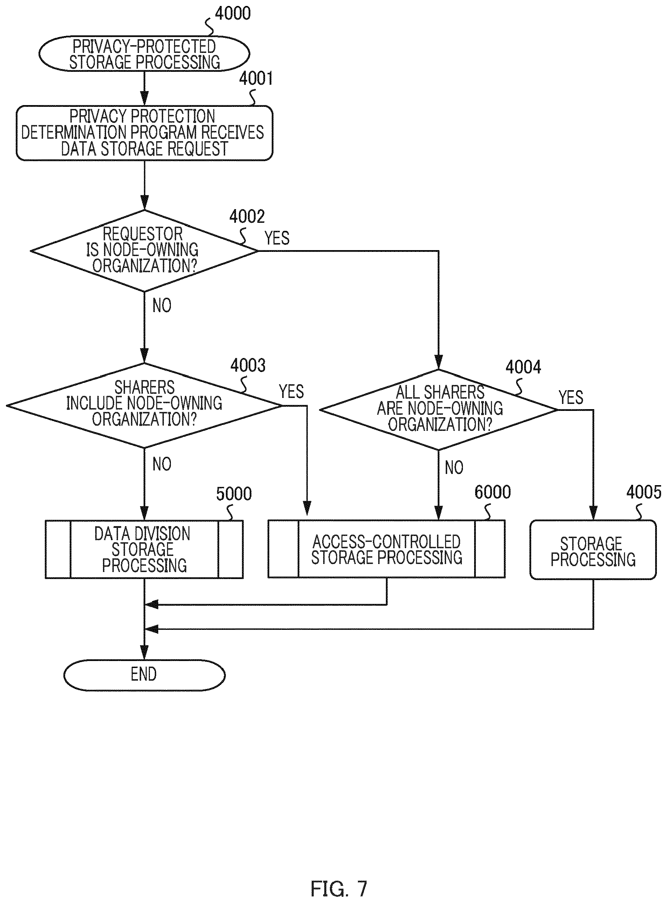

Fig. 7 is an example flow of the data management method of the present embodiment, and is specifically a flowchart of privacy-protected storage processing 4000 performed in the calculator system 10.

This processing 4000 starts when the privacy protection determination program 2120 receives a write TX issued by the business program 2110 in the client node 2000 (Step 4001).

The privacy protection determination program 2120 determines whether the organization to which the requestor of the TX execution belongs owns a node by extracting a user identifier and an organization identifier from a certificate added to the TX and referring to the node ownership information table 2150 (Step 4002).

Note that the present disclosure is not limited to this method, and for example, the user identifier and the organization identifier may be designated by the business program directly.

If it is determined in Step 4002 that the requestor's organization does not own a node (4002: No), the privacy protection determination program 2120 determines whether sharers of the data include a node-owning organization by referring to the node ownership information table 2150 (Step 4003). It is assumed here that the sharers are designated by the business program, but the present disclosure is not limited to this.

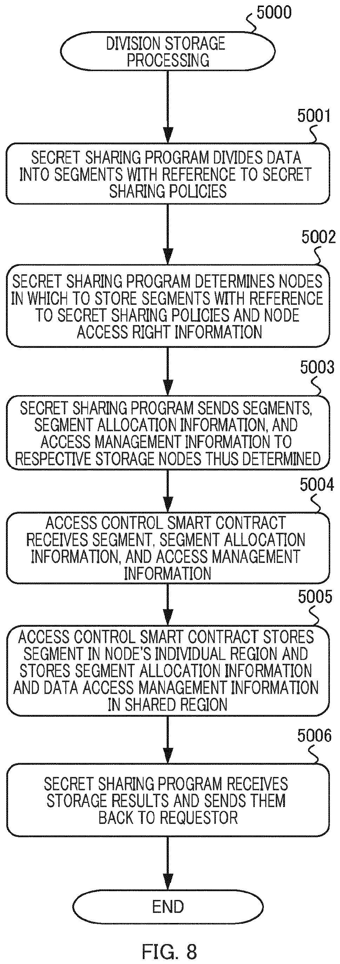

If it is determined in Step 4003 that the sharers do not include any node-owning organization (4003: No), the privacy protection determination program 2120 executes the data division storage processing shown in Fig. 8 (Step 5000).

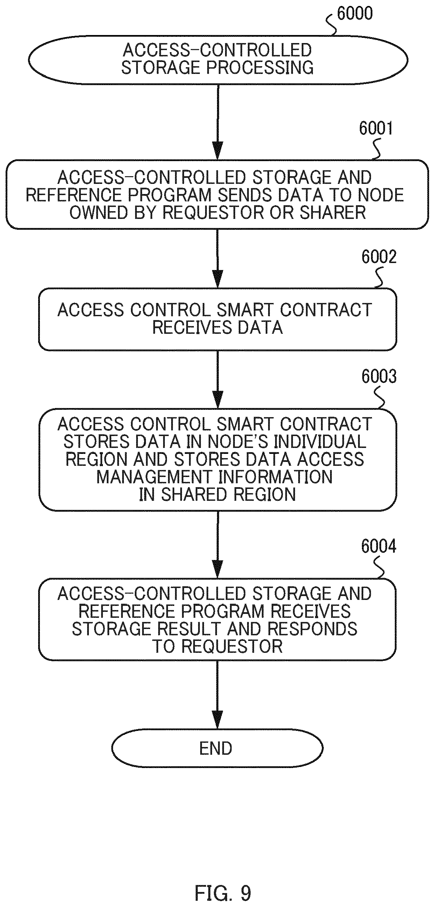

If it is determined in Step 4003 that the sharers include a node-owning organization (4003: Yes), the privacy protection determination program 2120 executes access-controlled storage processing shown in Fig. 9 (Step 6000).

Also, if it is determined in Step 4002 that the requestor's organization owns a node (4002: Yes), the privacy protection determination program 2120 determines whether all the sharers of the data own a node by referring to the node ownership information table 2150 (Step 4004) . It is assumed here that the sharers are designated by the business program, but the present disclosure is not limited to this.

If it is determined in Step 4004 that there is a non-node-owning organization among the sharers (4004: No), the privacy protection determination program 2120 executes the access-controlled storage processing shown in Fig. 9 (Step 6000) .

If it is determined in Step 4004 that all the sharers own a node (4004: Yes), the privacy protection determination program 2120 executes storage processing described in Non-Patent Literature 2 and the like, which uses the function of controlling the range in which to share data on a node-by-node basis (Step 4005) .

Although different privacy protection approaches are provided here for the three data sharing patterns, namely there are only node-owning organizations, there are only non-node-owning organizations, and there is a mixture of both, the data division storage processing 5000 may be executed for all the patterns. In this case, the processing in Fig. 7 is skipped, and the division storage processing in Fig. 8 is started when the secret sharing program 2130 receives the write TX issued by the business program 2110 of the client node 2000.

### <Flow Example 2>

Fig. 8 is a flowchart of the division storage processing performed by the calculator system 10 of the present embodiment. This processing 5000 is started by the secret sharing program 2130 in response to an execution request from the privacy protection determination program 2120.

First, the secret sharing program 2130 divides the data into data segments with reference to the secret sharing policy table 2160 (Step 5001).

The data may be divided using, e.g., the (k, n)-threshold secret sharing scheme. In this case, when data d in a TX is divided based on the division number 2162 (n) and the restorable number 2163 (k) in the secret sharing policy table 2160, a (k-1)-degree polynomial f(x) in which d is a constant term is created appropriately. Thus, (i, f(i)) (i = 1, 2, ..., n) expresses data segments.

There are other methods for dividing data into data segments using secret sharing, and the present disclosure is not limited to the above method. Any division method may be used as long as the method has the characteristics of secret sharing where the original information cannot be obtained from a data segment.

Also, all the data in the TX may be divided, or part of the data may be divided. Specifically, in a case of issuing a transaction containing, e.g., "order ID," "order receiving company ID," "order placing company ID," and "order payment amount," the entire part of the transaction is divided if all the contents are to be kept confidential, and only the value of the "order payment amount" is divided if only the order payment amount is to be kept confidential.

Next, the secret sharing program 2130 determines the nodes in which to store the segments by referring to the secret sharing policy table 2160 and the node access right information 3110 (Step 5002).

Specifically, by referring to the access right information 3110, the secret sharing program 2130 confirms that the issuer of the TX is an authentic user with the right to access certain nodes of organizations and lists up those nodes to which the user has the right to access.

Then, the secret sharing program 2130 determines, based on the redundancy level in the secret sharing policy table, how many distributed ledger nodes 1000 the same segment is to be allocated to and selects, based on the node selection criterion 2165, the distributed ledger nodes 1000 from the distributed ledger nodes listed up.

The secret sharing program 2130 selects the nodes randomly if the node selection criterion is "RANDOM," selects nodes with larger available space if the node selection criterion is "SPACE, " and selects nodes with higher performance, such as ones with, e.g., higher throughput or lower CPU utilization the node selection criterion is "PERFORMANCE." Although the nodes are automatically selected in this example, a user may manually select distributed ledger nodes to which to allocate the data segments.

Next, the secret sharing program 2130 transmits a TX containing a data segment as well as segment allocation information and access management information to the distributed ledger nodes 1000 selected as segment storing nodes (Step 5003) .

Next, the access control smart contract 1120 of the distributed ledger node 1000 receives the above-described information from the secret sharing program 2130 (Step 5004), and stores the data segment in the individual distributed ledger 1130 of the distributed ledger node 1000 itself and the segment allocation information and the data access management information in the shared distributed ledger 1140 (Step 5005) .

It is assumed here that the storage of the data segment is performed according to a consensus building policy for achieving consensus with all the segment-storing nodes and that the storage of the segment allocation information and the data access management information is performed according to a consensus building policy for achieving consensus with the data requestor and data sharer nodes. If the data requestor or the data sharer does not own a node, a consensus achieving event may, for example, be additionally transmitted to achieve consensus.

Then, the secret sharing program 2130 receives results of storage of the data segments and the like from the above distributed ledger nodes 1000, sends the results back to the execution requestor (Step 5006), and ends the processing. In the example flow described here, a completion event is transmitted to the secret sharing program 2130 after the segment is stored into the shared distributed ledger in Step 5005. However, the present disclosure is not limited to this. The completion event may be transmitted directly to the requestor, or a report of the completion of the storage processing may be sent from the access control smart contract 1120 to the secret sharing program 2130.

### <Flow Example 3>

Fig. 9 is a flowchart of access-controlled storage processing performed by the calculator system 10 of the present embodiment. This processing 6000 is started by the access-controlled storage and reference program 2140 in response to an execution request from the privacy protection determination program 2120.

In this case, first, the access-controlled storage and reference program 2140 transmits the data-containing TX and the access management information to the distributed ledger node 1000 owned by either the requestor or the sharer (Step 6001) . This step is performed to store the data into the individual distributed ledger 1130 in the node owned by the organization having the right to access the data.

Next, the access control smart contract 1120 in the distributed ledger node 1000 receives the above-described data and the like transmitted from the access-controlled storage and reference program 2140 (Step 6002).

Then, the access control smart contract 1120 stores the above-described data into the individual distributed ledger 1130 of the distributed ledger node 1000 and the data access management information into the shared distributed ledger 1140 (Step 6003).

The access-controlled storage and reference program 2140 then receives a result of storage in the distributed ledger node 1000 from the access control smart contract 1120, sends the result back to the requestor (Step 6004), and ends the processing.

In the example flow described here, a completion event is transmitted to the access-controlled storage and reference program 2140 after the storage into the shared distributed ledger 1140 in Step 6004. However, the present disclosure is not limited to this. The completion event may be transmitted directly to the requestor, or a report of the completion of the storage processing may be sent from the access control smart contract 1120 to the access-controlled storage and reference program 2140.

### <Flow Example 4>

Hereinabove, methods of data storage for keeping data confidential have been described using Figs. 7 to 9 for each of the three scenarios: there are only organizations owning a node, there are only organizations not owning a distributed ledger node 1000, and there is a mixture of both. Then, if there is an update to sharers of data, a data storage method suited for the new updated sharers is used so that the data may now be stored as provided by the new storage method.

If the update to the sharers does not change the scenario, it is only necessary to update the sharer identifier (s) in the access management information 1142 in a case where there are only organizations not owning a distributed ledger node 1000 or there is a mixture of both, and it is only necessary to update node information in the node-by-node-basis data shared range control mechanism as shown in Non-Patent Literature 2 in a case where there are only organizations owning a node.

To update the access management information 1142 correctly, it is necessary to set the consensus building policy such that it is essential to achieve consensus with the distributed ledger nodes 1000 among which to share the data. In addition, a consensus achieving event may be transmitted to an organization or a user belonging to the organization with which to share the data and which does not own the distributed ledger node 1000 to achieve consensus for the data sharer update processing.

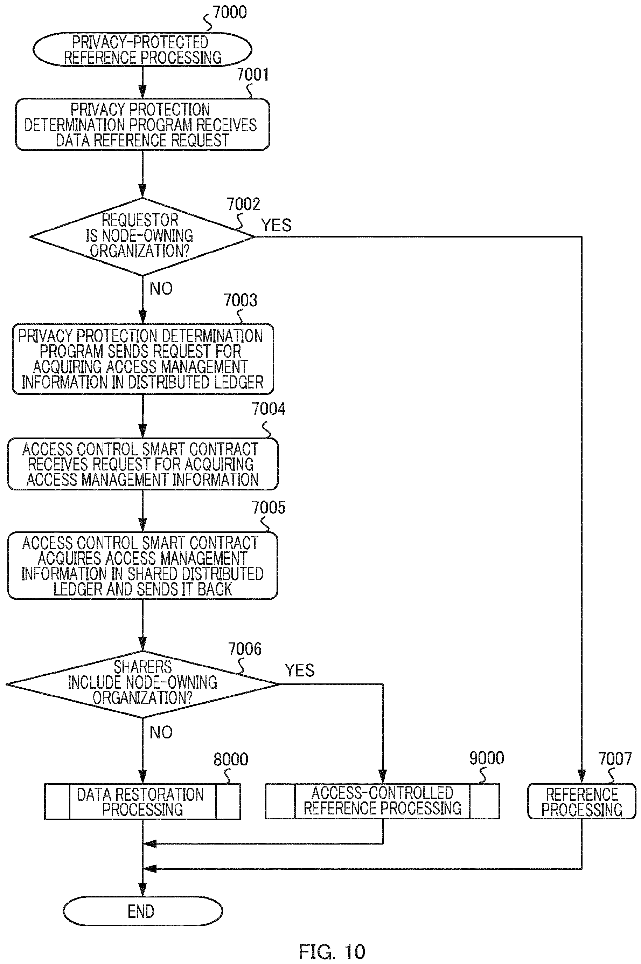

Fig. 10 is a flowchart of privacy-protected reference processing performed by the calculator system 10 of the present embodiment. This processing 7000 is started when the privacy protection determination program 2120 receives a read TX issued by the business program 2110 of the client node 2000 (Step 7001) .

The privacy protection determination program 2120 extracts a user identifier and an organization identifier from a certificate added to the TX, and determines whether the organization to which the requestor of the TX execution belongs owns a node by referring to the node ownership information table 2150 (Step 7002). Note that the present disclosure is not limited to this method, and the user identifier and the organization identifier may be directly designated by the business program.

If it is determined in Step 7002 that the requestor's organization does not own a node (7002: No), the privacy protection determination program 2120 transmits a request to acquire the access management information 1142 to the distributed ledger node 1000 (Step 7003). This step is performed to check the sharers with the right to access the data which is being requested to be read by the TX.

The distributed ledger node 1000 to which to transmit the acquisition request may be any node which the requestor has the right to access. Thus, the distributed ledger node 1000 may be automatically and randomly selected, or a user may manually designate a particular node.

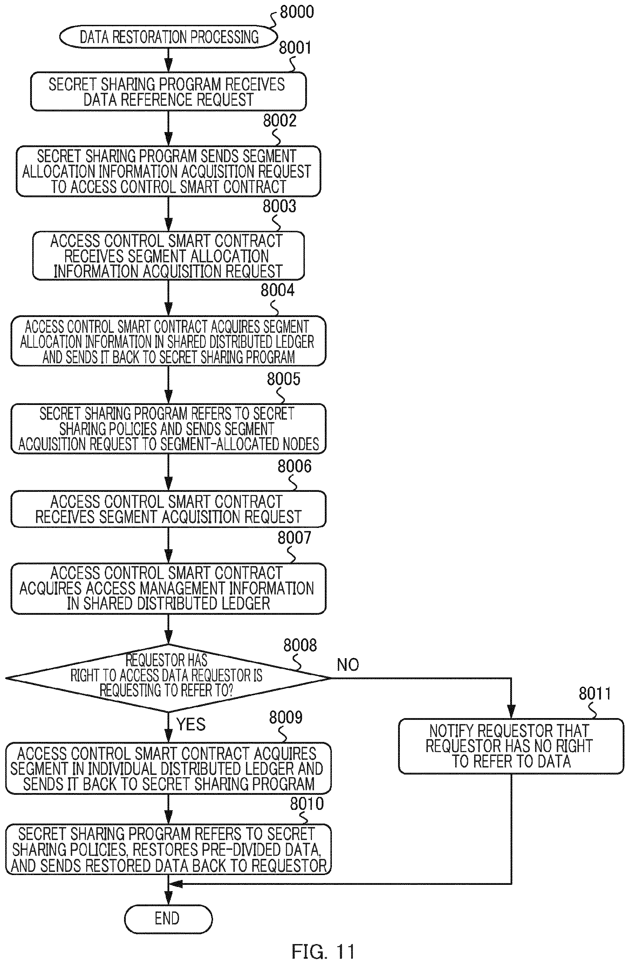

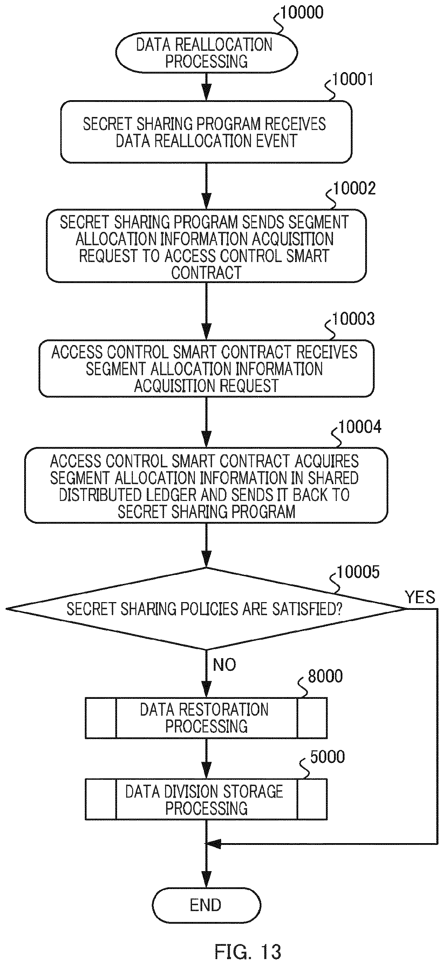

It is also possible to make the selection based on, e.g., the node selection criterion 2165 in the secret sharing policy table 2160. The method for this selection of the distributed ledger node 1000 is the same for the acquisition requests in the processing in Figs. 11 and 13, unless otherwise noted.

Next, the access control smart contract 1120 of the above distributed ledger node 1000 receives the request to acquire the access management information 1142 from the privacy protection determination program 2120 (Step 7004), acquires the access management information 1142 in the shared distributed ledger 1140, and sends the access management information 1142 back to the privacy protection determination program 2120 (Step 7005) .

Then, the privacy protection determination program 2120 identifies sharers based on the sharer identifiers in the above access management information 1142 acquired from the access control smart contract 1120 and determines whether the data sharers include a node-owning organization by referring to the node ownership information table 2150 (Step 7006).

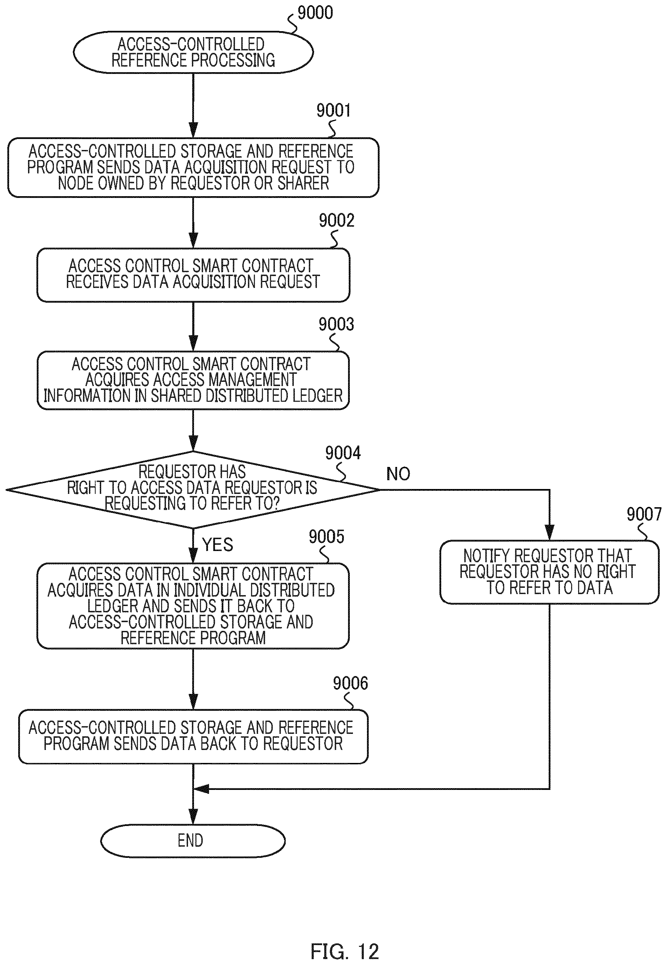

If it is determined that the sharers do not include a node-owning organization (7006: No), the privacy protection determination program 2120 executes the data restoration processing shown in Fig. 11 (Step 8000). If it is determined in Step 7006 that the sharers include a node-owning organization (7006: Yes), the privacy protection determination program 2120 executes the access controlled reference processing shown in Fig. 12 (Step 9000).

If it is determined in Step 7002 that the requestor's organization owns a node (7002: Yes), the privacy protection determination program 2120 executes regular reference processing described in Non-Patent Literature 2 and the like (Step 7007).

Here, different privacy protection approaches are provided here for the three data reference patterns, namely there are only node-owning organizations, there are only organizations not owning the distributed ledger node 1000, and there is a mixture of both. However, if the data division storage processing 5000 is executed for all the patterns in Fig. 7, the data restoration processing 8000 may also be executed for all the patterns in Fig. 10.

In this case, the processing in Fig. 10 is skipped, and the data restoration processing in Fig. 11 is started when the secret sharing program 2130 receives the read TX issued by the business program 2110 of the client node 2000.

### <Flow Example 5>

Fig. 11 is a flowchart of data restoration processing performed by the calculator system 10 of the present embodiment. This processing 8000 is started by the secret sharing program 2130 in response to an execution request from the privacy protection determination program 2120.

In this processing, first, upon receipt of a data reference request from the client node 2000 (Step 8001), the secret sharing program 2130 transmits a request for acquiring segment allocation information to the access control smart contract 1120 (Step 8002).

Next, receiving the request for acquiring segment allocation information (Step 8003), the access control smart contract 1120 acquires the segment allocation information in the shared distributed ledger 1140 and sends the segment allocation information back to the secret sharing program 2130 (Step 8004).

Then, the secret sharing program 2130 identifies the distributed ledger nodes 1000 to which data segments are allocated based on the value of the data allocated node 11413 in the segment allocation information, and transmits a segment acquisition request to the distributed ledger nodes 1000 holding the data segments with reference to the secret sharing policy table 2160 (Step 8005).

Here, the restorable number 2163 in the secret sharing policy table 2160 is used to determine how many data segments for which to issue the acquisition request, and the node selection criterion 2165 is used to select which data segments to acquire for restoration and, if there is more than one distributed ledger node 1000 having the same data segment, which distributed ledger node 1000 to issue the acquisition request to. For instance, if the node selection criterion 2165 is "PERFORMANCE, " the distributed ledger node 1000 with the highest reference performance may be selected.

Next, receiving the segment acquisition request (Step 8006), the access control smart contract 1120 acquires the access management information 1142 in the shared distributed ledger 1140 (Step 8007).

Then, the access control smart contract 1120 extracts a user identifier and an organization identifier from the certificate added to the TX and determines whether the user or their organization is registered in the access management information 1142 as having the right to access the data being requested (Step 8008).

If it is determined in Step 8008 that the TX is from a user having the access right (8008: Yes), the access control smart contract 1120 acquires the data segment stored in the individual distributed ledger 1130 and sends the data segment back to the data segment to the secret sharing program 2130 (Step 8009).

Then, the secret sharing program 2130 restores the pre-divided data with reference to the secret sharing policy table 2160, sends the data back to the requestor (which is the client node 2000) (Step 8010), and ends the processing.

The restoration may be performed as follows if, for example, data to be restored is divided using the (k, n)-threshold secret sharing scheme. Based on the restorable number 2163 (k) in the secret sharing policy table 2160, k or more data segments are collected from the distributed ledger nodes 1000, f(x) passing through coordinates represented by the k data segments is obtained by polynomial interpolation. Then, the constant term f (0) is the data d before being divided. There are other methods for restoration of data from data segments by secret sharing. The present disclosure is not limited to the above method as long as the restoration method has the characteristics of secret sharing where the original information can be restored only from k or more pieces of segment information.

If it is determined in Step 8008 that the TX is from a user having no access right (8008: No), the access control smart contract 1120 notifies (the client node 2000 of) the requestor that the user has no data reference right (Step 8011).

The notification to the requestor is not limited to the above case. The notification to the requestor may be done directly from the access control smart contract 1120 to the requestor by means of an event notification or the like or may be done via the secret sharing program 2130.

If the acquisition of data from the individual distributed ledger 1130 fails due to trouble or the like from Step 8006 to Step 8009, the processing may be continued as follows: re-executing Step 8005 or changing the destination of the segment acquisition request to a different distributed ledger node 1000 having the same data segment or to a different distributed ledger node 1000 having a different data segment.

### <Flow Example 6>

Fig. 12 is a flowchart of access-controlled reference processing performed by the calculator system 10 of the present embodiment. This processing 9000 is started by the access-controlled storage and reference program 2140 in response to an execution request from the privacy protection determination program 2120.

In this processing, first, the access-controlled storage and reference program 2140 transmits a TX containing a data acquisition request to a node owned by the requestor or a sharer (Step 9001).

Next, the access control smart contract 1120 of the above distributed ledger node 1000 receives the data acquisition request from the access-controlled storage and reference program 2140 (Step 9002), and acquires the access management information 1142 in the shared distributed ledger 1140 (Step 9003).

Then, the access control smart contract 1120 extracts a user identifier and an organization identifier from a certificate added to the TX and determines whether the user or their organization is registered in the access management information 1142 as having the right to access the data being requested (Step 9004).

If it is determined in Step 9004 that the TX is from a user having the access right (9004: Yes), the access control smart contract 1120 acquires the data stored in the individual distributed ledger 1130 and sends the data back to the access-controlled storage and reference program 2140 (Step 9005) .

Then, the access-controlled storage and reference program 2140 sends the data back to (the client node 2000 of) the requestor (Step 9006), and ends the processing.

If it is determined in Step 9004 that the TX is from a user having no access right (9004: No), the access control smart contract 1120 notifies the client node 2000 of the requestor that the user has no data reference right (Step 9007). The notification to the requestor is not limited to the above case. The notification to the requestor may be done directly from the access control smart contract 1120 to the requestor by means of an event notification or the like or may be done via the access-controlled storage and reference program 2140.

### <Flow Example 7>

Fig. 13 is a flowchart of data reallocation processing performed by the calculator system 10 of the present embodiment. This processing 10000 is started when the secret sharing program 2130 receives a data reallocation event (Step 10001).

Conceivable situations for the data reallocation event may include addition or deletion of the distributed ledger node 1000 to or from the blockchain system, inaccessibility to the distributed ledger node 1000 due to trouble, a reallocation request from a user, and periodic execution at predetermined times.

Next, the secret sharing program 2130 transmits a request for acquiring segment allocation information to the access control smart contract 1120 (Step 10002).

Then, receiving the request for acquiring segment allocation information (Step 10003), the access control smart contract 1120 acquires the segment allocation information 1141 in the shared distributed ledger 1140 and sends the segment allocation information 1141 back to the secret sharing program 2130 (Step 10004).

Then, the secret sharing program 2130 determines whether the current segment allocation situation satisfies the secret sharing policies with reference to the secret sharing policy table 2160, based on the redundancy level 2164, the node selection criterion 2165, or other indices, such as, for example, information on time at which the same data segment may be stored (not shown) (Step 10005).

If it is determined in Step 10005 that the policies are not satisfied (10005: No), the secret sharing program 2130 performs data restoration processing (Step 8000), re-divides the data by performing the data division and storage processing (Step 5000), and executes the reallocation.

This enables the redundancy of the segment allocation to be satisfied or the segments to be allocated properly according to available space or performance. If it is determined in Step 10005 that the policies are satisfied (10005: Yes), the secret sharing program 2130 ends the processing without performing data reallocation.

Although the data reallocation processing is performed if it is determined in Step 10005 that the secret sharing policies are not satisfied in the example described above, the condition in Step 10005 may be eliminated to perform the processing in Step 8000 and Step 5000.

This allows the reallocation processing to be executed unconditionally when a data reallocation event occurs. Also, for example, instead of re-dividing data, an already-divided data segment may be copied and reallocated to a different new distributed ledger node 1000. This enables the redundancy to be maintained without any costs spent on reallocation when, for example, the number of distributed ledger nodes 1000 having a certain data segment is decreased compared to the redundancy level due to deletion of or trouble in the distributed ledger node 1000.

According to the present example described above, data is divided into segments, and the data segments are distributed and allocated to BC nodes. Then, access to the segmented data is controlled using the smart contract and the management table in the shared distributed ledger of the BC. Thus, a user without a BC node can be provided with the data confidentiality function of the BC service.

Making use of the characteristics of the BC where the same smart contract is forcibly executable to all the distributed ledger nodes 1000, the same smart contract for access control is used to achieve transparent, detailed control of access to the individual distributed ledgers.

Using a function provided by the BC framework, the hash of a data segment stored in the individual distributed ledger 1130 can be stored into the shared distributed ledger 1140, and if the data segment stored in the individual distributed ledger 1130 is falsified, the falsification can be detected.

Also, a trail for original data can be generated and left as needed using the segment allocation information 1141 indicating a relation between data and a segment of the data which is managed in the shared distribution ledger 1140 and a trail of each data segment managed in the individual distributed ledger 1130.

Although the present disclosure shows an example of control of access to the individual distributed ledger 1130 provided by the BC framework, a data region managed and operated individually by each organization can be used instead of the individual distributed ledger 1130, and unified management of access to a generally-used data region, such as a server or a storage, can be controlled using the smart contract and the management table in the shared distributed ledger of the BC.

A user or an organization without a distributed ledger node 1000 is in a position of borrowing a data region from an organization owning a distributed ledger node 1000. Thus, the user or organization may conceivably need to pay for the BC service, including the fee for data usage.

In that case, the space taken up by each segment may be additionally managed in the segment allocation information 1141 and used, together with the information on the requestor and sharers in the access management information 1142, as source data for a system for charging in accordance with the amount of space used in the data region. This way, in addition to the amount by which the user is charged, the price to be paid to the node-owning organization for providing resources can be calculated and provided, which also leads to reinvigoration of the entire BC service.

In addition, in the present system, a data sharer can be easily added or deleted using the access management information 1142. Thus, adding an auditor as a sharer can prevent an auditor's audit of the processing contents from becoming difficult, and deleting the auditor as the sharer after completion of the audit allows the processing following the audit to be continued with no problem.

Also, the data confidentiality method achieved by the present disclosure requires lower management costs by use of the secret sharing technology than a method requiring high management costs such as encryption technology using secret keys. Specifically, the needs are eliminated for key sharing upon addition of a user, key deletion upon deletion of a user, periodic updates of keys against the information leak risk, generation of keys for the respective TXs to achieve security, and the like.

Although the best modes for carrying out the present disclosure and the like are described above in concrete terms, the present disclosure is not limited to the above and can be variously modified without departing from the gist thereof.

At least the following are demonstrated by the descriptions herein. Specifically, in the data management system of the present embodiment, the distributed ledger node may store the data segments in individual regions outside the distributed ledger, the individual regions being in the respective distributed ledger nodes as the data regions.

According to this, a data segment is stored not in the distributed ledger but in the storage region unique to the node and is neither shared nor synchronized with the other nodes. It is therefore possible to provide an organization without a BC node with the data confidentiality function of the BC service, allowing the organization to use a securer service.

In addition, in the data management system of the present embodiment, the distributed ledger node may store the data segments in storage regions which are in or coupled to the distributed ledger nodes as the data regions.

According to this, a data segment is stored not in the distributed ledger but in a storage device which is in or coupled to the node and is neither shared nor synchronized with the other nodes. It is therefore possible to provide an organization without a BC node with the data confidentiality function of the BC service, allowing the organization to use a securer service.

In addition, in the data management system of the present embodiment, the distributed ledger node may manage, as the access management information, information on a right to access the data for each user or each organization.

According to this, when data segments are collected to restore original data, the collection of the data segments per se can be controlled as necessary. It is therefore possible to provide an organization without a BC node with the data confidentiality function of the BC service, allowing the organization to use a securer service.

In addition, in the data management system of the present embodiment, the distributed ledger node may further manage, as the access management information, information on a period in which or a time limit by which the data is accessible.

According to this, when data segments are collected to restore original data, the collection of the data segments per se can be controlled as necessary. It is therefore possible to provide an organization without a BC node with the data confidentiality function of the BC service, allowing the organization to use a securer service.

In addition, in the data management system of the present embodiment, the distributed ledger node may refer to blockchain setting information held in the distributed ledger, check node-owning organizations described in the setting information, determine whether a user who is an executor of the storage request is a node-owning organization, and if the executing user is not a node-owning organization, perform the dividing processing.

This allows data access to be controlled on an organization-by-organization basis. It is therefore possible to provide an organization without a BC node with the data confidentiality function of the BC service, allowing the organization to use a securer service.

In addition, in the data management system of the present embodiment, the distributed ledger node may further execute processing to receive a data reference request for certain data from a different apparatus and identify allocation places where the data segments are allocated, based on information on the allocation nodes related to the data to be referred to and processing to collect the data segments from the allocation places and send the data segments to the different apparatus if the smart contract determines based on the access management information that the data segments are permitted to be accessed, and the different apparatus may execute processing to restore pre-divided data based on the data segments sent from the distributed ledger nodes.

According to this, restoration from data segments can be done in an efficient and secure manner. It is therefore possible to provide an organization without a BC node with the data confidentiality function of the BC service, allowing the organization to use a securer service.

In addition, in the data management system of the present embodiment, if the restoration fails, the different apparatus may execute restoration based on the information on the allocation nodes, using data segments different from the data segments with which the restoration failed.

According to this, data restoration can be done accurately and efficiently based on data segments with redundancy. It is therefore possible to provide an organization without a BC node with the data confidentiality function of the BC service, allowing the organization to use a securer service.

In addition, in the data management system of the present embodiment, upon receipt of a request for changing certain information in the distributed ledger from a different apparatus, the distributed ledger node may build consensus with other distributed ledger nodes forming the distributed ledger system or achieve consensus with an executor of the storage request, and update the access management information in the distributed ledger using the smart contract.

According to this, situations such as, e.g., reorganization of nodes can be handled appropriately, properly maintaining a situation where allocation of data segments and data restoration based on the data segments can be achieved in a secure manner. It is therefore possible to provide an organization without a BC node with the data confidentiality function of the BC service, allowing the organization to use a securer service.

In addition, in the data management system of the present embodiment, the distributed ledger node may reallocate the data segments if there is an increase or decrease in the distributed ledger nodes designated to be allocated the data segments, if receiving a request from a user, or every time a certain period of time elapses.

According to this, allocation of data segments can be optimized at all times in accordance with, e.g., an increase or decrease in the nodes. It is therefore possible to provide an organization without a BC node with the data confidentiality function of the BC service, allowing the organization to use a securer service.

In addition, in the data management system of the present embodiment, prior to the reallocation of the data segments, the distributed ledger node may restore data based on the data segments and re-divide the data thus restored.

According to this, by appropriately changing the data segments to allocate to the nodes in accordance with a change in the node configuration, it is possible not to permit data to be restored from data segments allocated before the change. It is therefore possible to provide an organization without a BC node with the data confidentiality function of the BC service, allowing the organization to use a securer service.

In addition, in the data management system of the present embodiment, according to usage of the data region, the distributed ledger node may determine a monetary amount to charge a user who is an executor of the storage request or a price to pay to an owner of the distributed ledger node for providing resources.

According to this, usage fees for an outside user that does not operate a distributed ledger node to use a distributed ledger node can be calculated based on the usage of the distributed ledger node. This leads to construction of an environment where the operator of a distributed ledger node can easily prompt an outside user to use the distributed ledger system in a more secure manner than before. It is therefore possible to provide an organization without a BC node with the data confidentiality function of the BC service, allowing the organization to use a securer service.

## Claims

1. A data management system comprising distributed ledger nodes forming a distributed ledger system, one of the nodes configured to execute
processing to receive a request for storing data from a different apparatus and generate data segments by dividing the data,
processing to determine a plurality of allocation nodes to which to allocate the data segments in conformity to a predetermined rule,
processing to distribute and store the data segments in data regions in the respective allocation nodes, and
processing to manage, in a distributed ledger, information on the allocation nodes and access management information for management of access to the data, using a smart contract that the node already has.

2. The data management system according to claim 1, wherein
the distributed ledger node is configured to store the data segments in individual regions outside the distributed ledger, the individual regions being in the respective distributed ledger nodes as the data regions.

3. The data management system according to claim 2, wherein
the distributed ledger node is configured to store the data segments in storage regions which are in or coupled to the distributed ledger nodes as the data regions.

4. The data management system according to claim 1, wherein
the distributed ledger node is configured to manage, as the access management information, information on a right to access the data for each user or each organization.

5. The data management system according to claim 1, wherein
the distributed ledger node is configured to further manage, as the access management information, information on a period in which or a time limit by which the data is accessible.

6. The data management system according to claim 1, wherein
the distributed ledger node is configured to refer to blockchain setting information held in the distributed ledger, check node-owning organizations described in the setting information, determine whether a user who is an executor of the storage request is a node-owning organization, and if the executing user is not a node-owning organization, perform the dividing processing.

7. The data management system according to claim 1, wherein
the distributed ledger node is configured to further execute
processing to receive a data reference request for certain data from a different apparatus and identify allocation places where the data segments are allocated, based on information on the allocation nodes related to the data to be referred to and
processing to collect the data segments from the allocation places and send the data segments to the different apparatus if the smart contract determines based on the access management information that the data segments are permitted to be accessed, and
the different apparatus is configured to execute processing to restore pre-divided data based on the data segments sent from the distributed ledger nodes.

8. The data management system according to claim 7, wherein
if the restoration fails, the different apparatus is configured to execute restoration based on the information on the allocation nodes, using data segments different from the data segments with which the restoration failed.

9. The data management system according to claim 1, wherein
upon receipt of a request for changing certain information in the distributed ledger from a different apparatus, the distributed ledger node is configured to build consensus with other distributed ledger nodes forming the distributed ledger system or achieve consensus with an executor of the storage request, and update the access management information in the distributed ledger using the smart contract.

10. The data management system according to claim 1, wherein
the distributed ledger node is configured to reallocate the data segments if there is an increase or decrease in the distributed ledger nodes designated to be allocated the data segments, if receiving a request from a user, or every time a certain period of time elapses.

11. The data management system according to claim 10, wherein
prior to the reallocation of the data segments, the distributed ledger node is configured to restore data based on the data segments and is configured to re-divide the data thus restored.

12. The data management system according to claim 1, wherein
according to usage of the data region, the distributed ledger node is configured to determine a monetary amount to charge a user who is an executor of the storage request or a price to pay to an owner of the distributed ledger node for providing resources.

13. A data management method implemented by a data management system, comprising:
by a node forming a distributed ledger system, executing
processing to receive a request for storing data from a different apparatus and generate data segments by dividing the data,
processing to determine a plurality of allocation nodes to which to allocate the data segments in conformity to a predetermined rule,
processing to distribute and store the data segments in data regions in the respective allocation nodes, and
processing to manage, in a distributed ledger, information on the allocation nodes and access management information for management of access to the data, using a smart contract that the node already has.

14. A node forming a distributed ledger system, the node comprising a computation part that is configured to execute
processing to receive a request for storing data from a different apparatus and generate data segments by dividing the data,
processing to determine a plurality of allocation nodes to which to allocate the data segments in conformity to a predetermined rule,
processing to distribute and store the data segments in data regions in the respective allocation nodes, and
processing to manage, in a distributed ledger, information on the allocation nodes and access management information for management of access to the data, using a smart contract that the node already has.
